# EUROPEAN PATENT APPLICATION

(11) **EP 2 284 777 A1**
(43) Date of publication of application: **16.02.2011**
(21) Application number: 10172808.7
(22) Date of filing: 13.08.2010
(51) Int. Cl.: G06Q 10/00

(54) **System and method for monitoring greenhouse gas**

(30) Priority: 14.08.2009 KR 20090075421; 28.06.2010 KR 20100061431
(71) Applicant: Electronics and Telecommunications Research Institute, Daejeon 305-350 (KR)
(72) Inventor: Choi, Jong-woo, 301-758, Daejeon (KR); Shin, Sung Woong, 305-350, Daejeon (KR)
(74) Representative: Betten & Resch

(57) **Abstract**

A greenhouse gas monitoring system collects information about greenhouse gas and analyzes a greenhouse gas emissions distribution using the collected information about greenhouse gas Thereafter, the greenhouse gas monitoring system generates a greenhouse gas distribution map by mapping the greenhouse gas emissions distribution to a three-dimensional digital map and provides the greenhouse gas distribution map to the user according to a user's request.

## Description

### CROSS-REFERENCE TO RELATED APPUCATION

This application claims priority to and the benefit of Korean Patent Application Nos. 10-2009-0075421 and 10-2010-0061431 filed in the Korean Intellectual Property Office on August 14, 2009 and June 28, 2010, the entire contents of which are incorporated herein by reference.

### BACKGROUND OF THF INVENTION

### (a) Field of the Invention

The present invention relates to a system and method for monitoring greenhouse gas.

### (b) Description of the Related Art

Due to indiscreet development that does not consider the environment, the use of fossil fuels, and an increase in the number of internal combustion engine vehicles, a large quantity of greenhouse gas is generated. As greenhouse gas increases, global warming in which atmospheric temperature rises progresses. Accordingly, countries of the world are preparing and executing a global greenhouse gas emissions suppression plan through various environment conferences.

The South Korean government is scheduled to directly manage greenhouse gas emissions and energy use amount. That is, a system that sets a target amount of a greenhouse gas emissions and an energy use amount for a company that emissions a lot of greenhouse gas or consumes a lot of energy, and that checks and manages an actual greenhouse gas emissions and energy use amount, shall be enforced. In this case, companies that receive management of the government due to greenhouse gas emissions require a system that can effectively monitor greenhouse gas and quantify greenhouse gas in order to achieve a target amount of a greenhouse gas emissions and an energy use amount.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a system and method for monitoring greenhouse gas having advantages of capable of quantifying greenhouse gas and effectively monitoring greenhouse gas.

An exemplary embodiment of the present invention provides a greenhouse gas monitoring system. The greenhouse gas monitoring system includes an information collection unit, a measuring and analyzing unit, and a digital map generating unit. The information collection unit collects information about greenhouse gas. The measuring and analyzing unit measures an emissions of greenhouse gas using the collected information about greenhouse gas and analyzes an emissions distribution of the greenhouse gas. The digital map generating unit generates and manages a greenhouse gas distribution map by mapping the emissions distribution of the greenhouse gas to a three-dimensional digital map.

Another embodiment of the present invention provides a method of monitoring greenhouse gas in a greenhouse gas monitoring system. The method includes collecting information about the greenhouse gas, measuring greenhouse gas and analyzing a greenhouse gas emissions distribution using the information about the greenhouse gas, and manufacturing a greenhouse gas distribution map by mapping the greenhouse gas emissions distribution to a three-dimensional digital map.

### BRIEF DESCRIPTION OF THE DRAWINGS

FIG. 1 is a diagram illustrating a greenhouse gas monitoring system according to an exemplary embodiment of the present invention.
FIG. 2 is a flowchart illustrating a method of monitoring greenhouse gas according to an exemplary embodiment of the present invention.
FIG. 3 is a diagram illustrating a plane and a side surface of topography in a three-dimensional digital map.
FIG. 4 is a diagram illustrating a greenhouse gas emissions distribution on a three-dimensional digital map according to a first exemplary embodiment of the present invention.
FIG. 5 is a diagram illustrating a greenhouse gas emissions distribution on a three-dimensional digital map according to a second exemplary embodiment of the present invention.
FIG. 6 is a block diagram illustrating a configuration of a digital map generating unit that is shown in FIG. 1.
FIG. 7 is a flowchart illustrating a method of generating a digital map of a digital map generating unit that is shown in FIG. 1.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

In addition, in the entire specification and claims, unless explicitly described to the contrary, the word "comprise" and variations such as "comprises" or "comprising" will be understood to imply the inclusion of stated elements but not the exclusion of any other elements.

Now, a system and method for monitoring greenhouse gas according to an exemplary embodiment of the present invention will be described in detail with reference to the drawings.

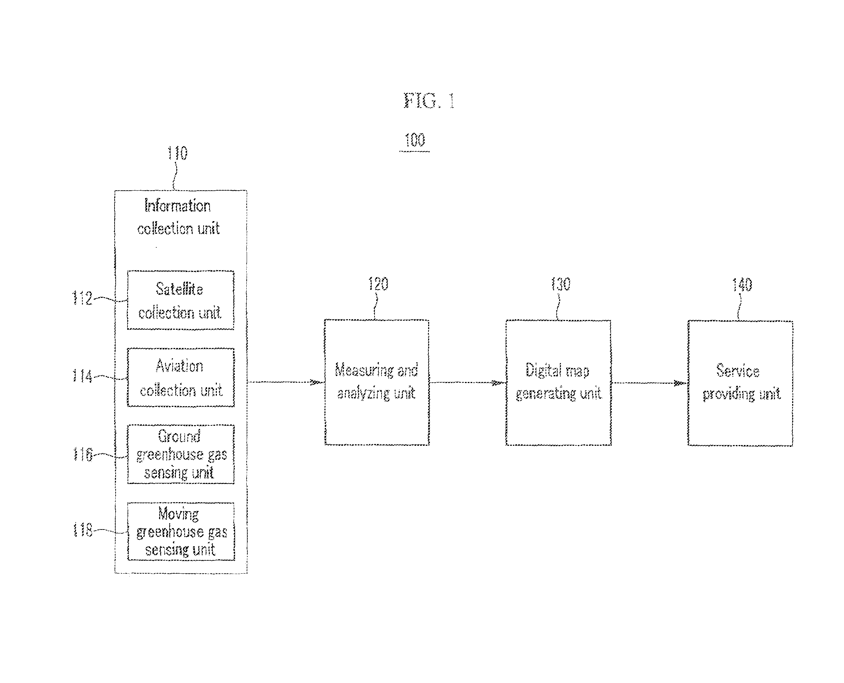

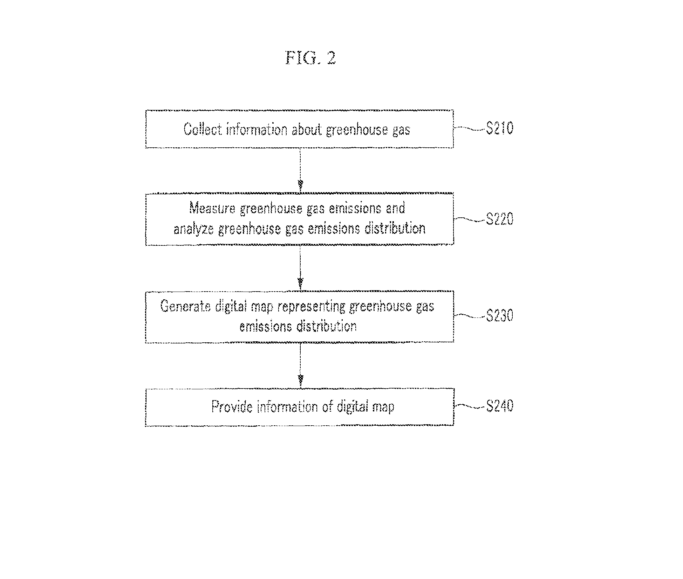

FIG. 1 is a diagram illustrating a greenhouse gas monitoring system according to an exemplary embodiment of the present invention, and FIG. 2 is a flowchart illustrating a method of monitoring greenhouse gas according to an exemplary embodiment of the present invention.

Referring to FIG. 1, a greenhouse gas monitoring system 100 includes an information collection unit 110, a measuring and analyzing unit 120, a digital map generating unit 130, and a service providing unit 140.

Referring to FIG. 2, the information collection unit 110 collects information about greenhouse gas from a wide area and a narrow area (S210), and transfers the collected information about greenhouse gas to the measuring and analyzing unit 120. The information collection unit 110 includes a satellite collection unit 112, an aviation collection unit 114, a ground greenhouse gas sensing unit 116, and a moving greenhouse gas sensing unit 118.

The satellite collection unit 112 collects information about greenhouse gas using a hyper-spectral image that is photographed by a satellite, and the aviation collection unit 114 collects information about greenhouse gas using an image that is photographed by an aircraft. The ground greenhouse gas sensing unit 116 includes a fixing sensor (not shown) that is installed at an emission source (for example, a factory and a building) on the ground and a point other than the emission source, and collects information about greenhouse gas that is measured through the fixing sensor. The moving greenhouse gas sensing unit 118 includes a moving sensor (not shown) that is installed at a moving emission source (for example, automobiles and motorcycles) and appliances other than the emission source, and collects information about greenhouse gas that is measured through the moving sensor. Here, the information about greenhouse gas that is measured through the fixing sensor and the moving sensor may include, for example, a sensor ID, a measurement day and time, and a greenhouse gas emissions on a time basis.

That is, the satellite collection unit 112 and the aviation collection unit 114 perform a function of collecting information about greenhouse gas from a wide area. However, in order to collect information about greenhouse gas through the satellite collection unit 112 and the aviation collection unit 114, much collection cost and collection time period are required, and it is difficult to collect greenhouse gas in real time. The ground greenhouse gas sensing unit 116 and the moving greenhouse gas sensing unit 118 perform a function of collecting information about greenhouse gas in real time through a fixing (or a fixed) sensor and a moving sensor and collecting information about greenhouse gas from a narrow area, thereby supplementing a drawback of the satellite collection unit 112 and the aviation collection unit 114.

The measuring and analyzing unit 120 measures a greenhouse gas emissions and analyzes a greenhouse gas emissions distribution using information about greenhouse gas that is collected by the information collection unit 110 (S220). Further, the measuring and analyzing unit 120 stores and manages the measured greenhouse gas emissions and greenhouse gas emissions distribution on a region basis.

The digital map generating unit 130 generates a three-dimensional digital map of a desired region using a three-dimensional geographic information system (GIS), and maps a greenhouse gas emissions distribution to the three-dimensional digital map, thereby generating a digital map (hereinafter referred to as a "greenhouse gas distribution map") representing a greenhouse gas emissions distribution (S230). Thereafter, the digital map generating unit 130 stores and manages a greenhouse gas distribution map.

The service providing unit 140 provides information of the greenhouse gas distribution map through various media (for example, a web site and a mobile device) (S240). That is, when the user requests the greenhouse gas distribution map through a web site and a mobile device, the service providing unit 140 analyzes a request from the user and provides a greenhouse gas distribution map of a region that is requested by the user to the user.

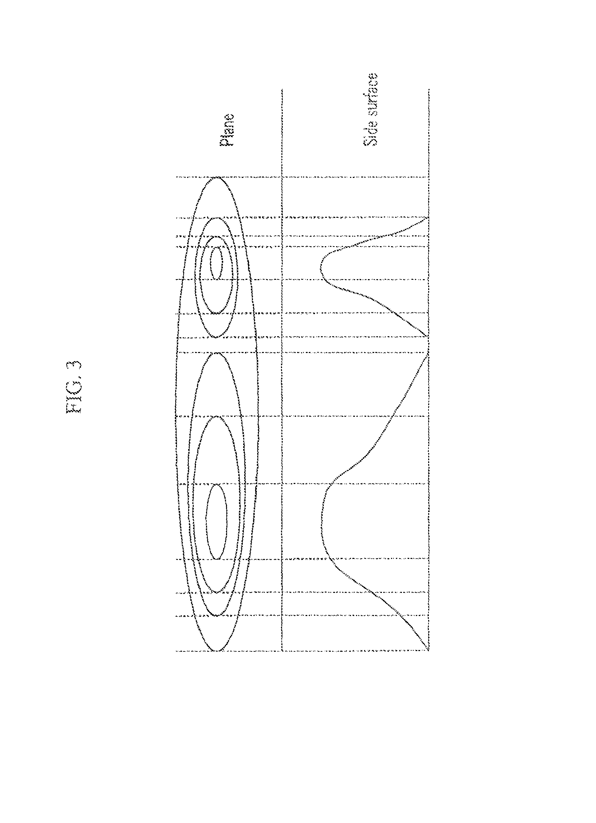

Next, an exemplary embodiment representing a greenhouse gas emissions distribution on a three-dimensional digital map will be described with reference to FIGS. 3 to 5.

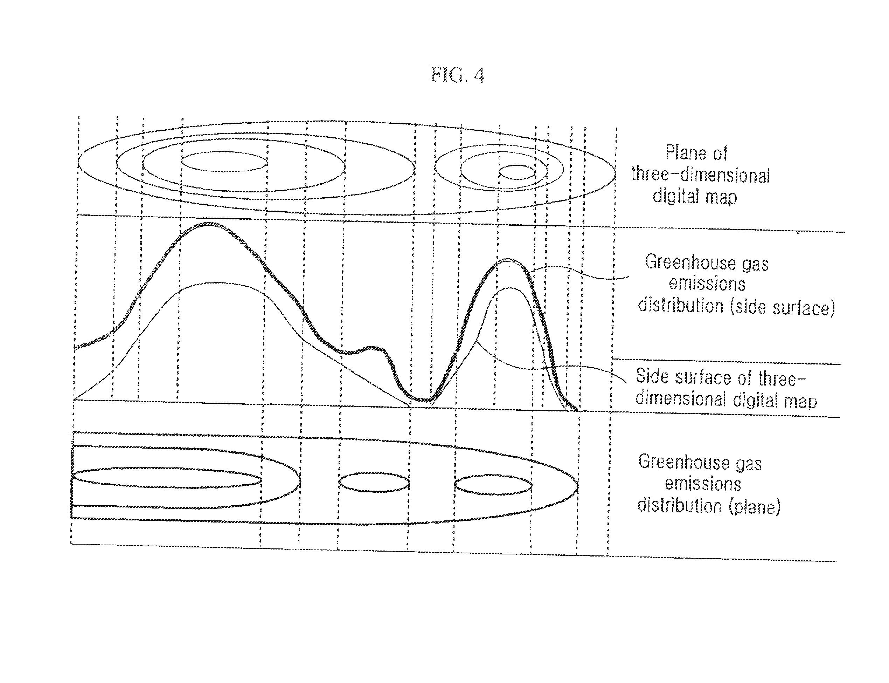

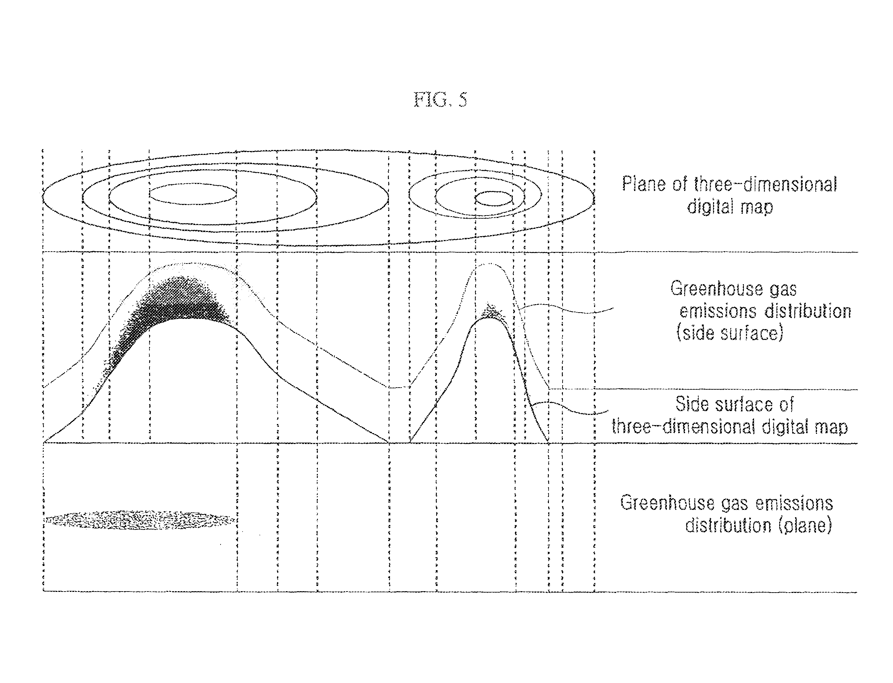

FIG. 3 is a diagram illustrating a plane and a side surface of topography in a three-dimensional digital map, FIG. 4 is a diagram illustrating a greenhouse gas emissions distribution on a three-dimensional digital map according to a first exemplary embodiment of the present invention, and FIG. 5 is a diagram illustrating a greenhouse gas emissions distribution on a three-dimensional digital map according to a second exemplary embodiment of the present invention.

As shown in FIG. 3, in the three-dimensional digital map, high and low of a plane is expressed by a contour line, and high and low of a side surface is three-dimensionally expressed.

The digital map generating unit 130 can express a greenhouse gas emissions distribution in the three-dimensional digital map with a contour line, as shown in FIG. 4. However, in the three-dimensional digital map using such an expressing method, contour lines are overlapped according to a greenhouse gas emissions distribution and thus it is difficult for the user to recognize the contour line. Therefore, the digital map generating unit 130 according to an exemplary embodiment of the present invention can express a greenhouse gas emissions distribution on a three-dimensional digital map using a three-dimensional translucent object, as shown in FIG. 5. In this case, the three-dimensional translucent object may be a cloud or fog.

Specifically, the digital map generating unit 130 positions a three-dimensional translucent object at a fixed height from the three-dimensional digital map, and if a greenhouse gas emissions distribution is much, the digital map generating unit 130 lowers transparency, while if a greenhouse gas emissions distribution is less, the digital map generating unit 130 raises transparency, and thus a greenhouse gas emissions distribution is expressed on the three-drmensional digital map. Thereby, when no greenhouse gas emissions exists, very clear topography is shown, and when the greenhouse gas emissions is much, a heavy fog is shown.

That is, the digital map generating unit 130 expresses a greenhouse gas emissions distribution with transparency on a three-dimensional digital map by connecting a three-dimensional translucent object to the GIS, thereby providing a multi-scale digital map for a greenhouse gas emissions distribution to the user.

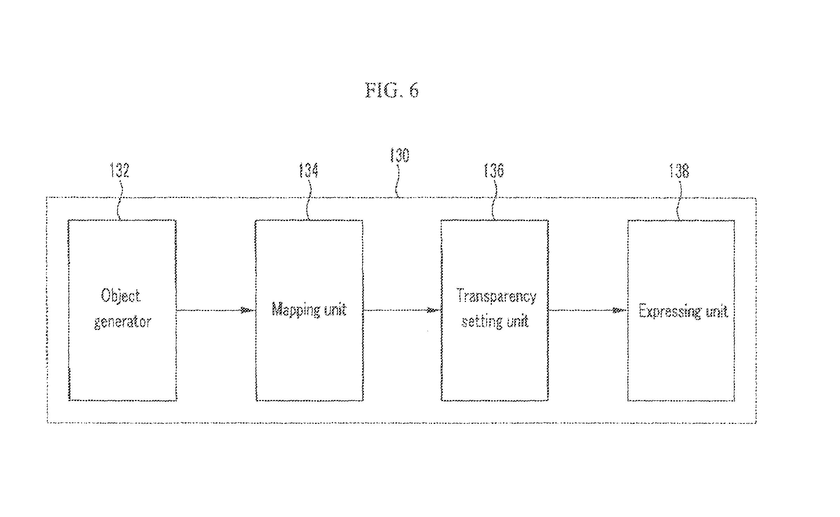

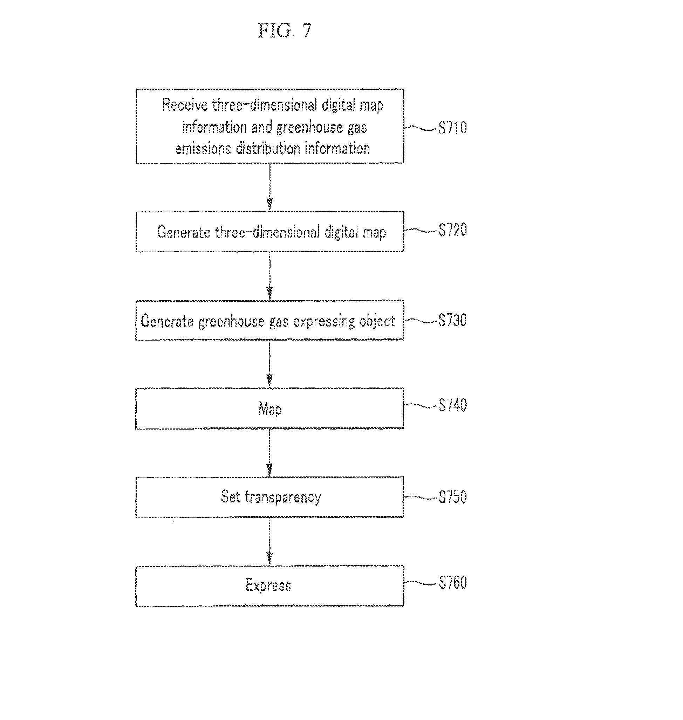

FIG. 6 is a block diagram illustrating a configuration of the digital map generating unit that is shown in FIG. 1, and FIG. 7 is a flowchart illustrating a method of generating a digital map of the digital map generating unit that is shown in FIG. 1.

Referring to FIG. 6, the digital map generating unit 130 includes an object generator 132, a mapping unit 134, a transparency setting unit 136, and an expressing unit 138.

Referring to FIG. 7, the object generator 132 receives a three-dimensional digital map of a corresponding region from the GIS, and receives greenhouse gas emissions distribution information of the corresponding region from the measuring and analyzing unit 120 (S710). Thereafter, the object generator 132 generates a three-dimensional digital map using three-dimensional digital map information of a corresponding region (S720), and generates a greenhouse gas expressing object expressing a greenhouse gas emissions distribution on the three-dimensional digital map using greenhouse gas emissions distribution information of a corresponding region (S730). In this case, the object generator 132 can generate a greenhouse gas expressing object to be positioned at a predetermined height from the ground. As shown in FIG- 5, a three-dimensional translucent object can be used as the greenhouse gas expressing object.

The mapping unit 134 inputs or maps greenhouse gas distribution information to determine a form of a greenhouse gas expressing object that expresses a greenhouse gas emissions distribution at a position on a three-dimensional digital map of a corresponding region (S740). Here, a form of the greenhouse gas expressing object may include a color and brightness.

The transparency setting unit 136 sets transparency to the greenhouse gas expressing object that is generated on the three-dimensional digital map according to greenhouse gas emissions distribution information (S750).

The expressing unit 138 expresses a three-dimensional digital map, i.e., a greenhouse gas distribution map in which transparency is set to the greenhouse gas expressing object (S760), and stores the greenhouse gas distribution map.

Therefore, according to an exemplary embodiment of the present invention, by mapping and displaying a greenhouse gas emissions distribution to a three-dimensional digital map, a user can quantitatively monitor an emissions and an emissions distribution of greenhouse gas through the greenhouse gas distribution map.

According to an exemplary embodiment of the present invention, by expressing a greenhouse gas emissions distribution on a three-dimensional digital map, the greenhouse gas can be effectively monitored. Further, the greenhouse gas can be quantified.

Exemplary embodiments of the present invention may not only be embodied through the above-described apparatus and method but may also be embodied through a program that realizes a function corresponding to a configuration of the exemplary embodiments of the present invention or a recording medium on which the program is recorded, and can be easily embodied by a person of ordinary skill in the art from a description of the foregoing exemplary embodiment. For example, when generating a greenhouse gas distribution map, a greenhouse gas emissions distribution may be expressed using a different method from a method of setting transparency to a three-dimensional translucent object.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A greenhouse gas monitoring system comprising:
an information collection unit that collects information about greenhouse gas;
a measuring and analyzing unit that measures an emissions of greenhouse gas using the collected information about greenhouse gas and that analyzes an emissions distribution of the greenhouse gas; and
a digital map generating unit that generates and manages a greenhouse gas distribution map by mapping an emissions distribution of the greenhouse gas to the three-dimensional digital map.

2. The greenhouse gas monitoring system of claim 1, wherein the digital map generating unit comprises:
an object generator that generates a three-dimensional digital map of a desired region using a three-dimensional geographic information system (GIS), and that generates a greenhouse gas expressing object on the three-dimensional digital map;
a mapping unit that maps greenhouse gas emissions distribution information on the three-dimensional digital map to determine a form of the greenhouse gas expressing object; and
a digital map expressing unit that expresses the greenhouse gas expressing object on the three-dimensional digital map.

3. The greenhouse gas monitoring system of claim 2, wherein the greenhouse gas expressing object is a three-dimensional translucent object.

4. The greenhouse gas monitoring system of claim 3, wherein the translucent object is a cloud or fog.

5. The greenhouse gas monitoring system of one of claims 2 to 4, wherein the digital map generating unit further comprises a transparency setting unit that sets transparency of the greenhouse gas expressing object according to the greenhouse gas emissions distribution information.

6. The greenhouse gas monitoring system of one of claims 1 to 5, wherein the information collection unit collects information about the greenhouse gas from a wide area using image information that is photographed by a satellite and an aircraft.

7. The greenhouse gas monitoring system of one of claims 1 to 6, wherein the information collection unit collects information about the greenhouse gas from a narrow area using a sensor that is installed in an emission source that is fixed on the ground and an emission source that moves on the ground.

8. The greenhouse gas monitoring system of one of claims 1 to 7, further comprising a providing unit that provides the greenhouse gas distribution map to the user according to a user's request.

9. A method of monitoring greenhouse gas in a greenhouse gas monitoring system, the method comprising:
collecting information about the greenhouse gas;
measuring a greenhouse gas emissions and analyzing a greenhouse gas emissions distribution using the information about the greenhouse gas; and generating
a greenhouse gas distribution map by mapping the greenhouse gas emissions distribution to a three-dimensional digital map.

10. The method of claim 9, wherein the generating of a greenhouse gas distribution map comprises:
generating a three-dimensional digital map of a desired region;
generating a greenhouse gas expressing object on the three-dimensional digital map; and
expressing the greenhouse gas expressing object on the three-dimensional digital map according to the greenhouse gas emissions distribution.

11. The method of claim 10, wherein the expressing of the greenhouse gas expressing object comprises setting transparency of the greenhouse gas expressing object according to the greenhouse gas emissions distribution.

12. The method of claim 10 or 11, wherein the greenhouse gas expressing object is a three-dimensional translucent object.

13. The method of one of claims 9 to 12, further comprising providing greenhouse gas distribution map to the user according to a user's request.
